# EUROPÄISCHE PATENTANMELDUNG

(11) **EP 4 141 714 A1**
(43) Veröffentlichungstag der Anmeldung: **01.03.2023**
(21) Anmeldenummer: 21203009.2
(22) Anmeldetag: 15.10.2021
(51) Int. Cl.: G06F 21/50

(54) **VERFAHREN ZUR PRÜFUNG EINER KONFORMITÄT EINES TECHNISCHEN GERÄTS ODER GERÄTESYSTEMS, COMPUTERPROGRAMMPRODUKT UND PRÜFRECHNER**

(30) Priorität: 30.08.2021 DE 102021209493
(71) Anmelder: Siemens Aktiengesellschaft, 80333 München (DE)
(72) Erfinder: Fischer, Christoph, 80687 München (DE); Limmer, Tobias, 80797 München (DE); Petri, Bernhard, 81477 München (DE); Rammig, Ralf, 81739 München (DE); Riedmüller, Reinhard, 81735 München (DE)

(57) **Zusammenfassung**

Bei dem Verfahren zur Prüfung einer Konformität eines technischen Geräts mit einer technischen Spezifikation zur IT-Sicherheit wird die technische Spezifikation in mehrere Anforderungskategorien für Anforderungen zur IT-Sicherheit an das technische Gerät unterteilt und es wird ein Regelsatz herangezogen, mittels welcher jeder der Anforderungskategorien zumindest eine Prüfmaßnahme zugeordnet ist und mittels der zugeordneten Prüfmaßnahmen wird jede der Anforderungskategorien einer Prüfung unterzogen und abhängig von einem Ergebnis der Prüfungen wird das Vorliegen oder Nichtvorliegen der Konformität festgestellt.

## Beschreibung

Die Erfindung betrifft ein Verfahren zur Prüfung einer Konformität eines technischen Geräts oder Gerätesystems mit einer technischen Spezifikation zur IT-Sicherheit sowie ein Verfahren zum Betreiben des technischen Geräts oder Gerätesystems und ein Computerprogrammprodukt und einen Prüfrechner.

Bei der Zertifizierung und Validierung von technischen Geräten und Gerätesystemen mit einer Konformität mit einer technischen Spezifikation werden regelmäßig zahlreiche Prüfszenarien und Prüfwerkzeuge eingesetzt. Viele dieser Prüfszenarien und Prüfwerkzeuge decken Teilbereiche der technischen Spezifikation ab. Allerdings gibt es bislang nicht das eine, allumfassende Prüfwerkzeug, welches die Konformität von technischen Geräten und Gerätesystemen mit der technischen Spezifikation vollständig prüfen könnte.

Folglich steigt bei bekannten Verfahren zur Prüfung einer Konformität eines technischen Geräts oder eine Gerätesystems mit einer technischen Spezifikation der manuelle Aufwand. Zugleich nimmt infolge der fortschreitenden Digitalisierung die Anzahl von zu prüfenden technischen Geräten in Automatisierungssystemen weiter zu. Bekannte Lösungen skalieren daher bislang nicht hinreichend gut.

Es ist daher Aufgabe der Erfindung, ein verbessertes Verfahren zur Prüfung einer Konformität eines technischen Gerätes oder Gerätesystems mit einer technischen Spezifikation anzugeben, welches insbesondere besser skalierbar ist. Ferner ist es Aufgabe der Erfindung, ein verbessertes Computerprogrammprodukt und einen verbesserten Prüfrechner anzugeben, mit welchen das verbesserte Verfahren ausgeführt werden kann. Zudem ist es Aufgabe der Erfindung ein verbessertes Verfahren zum Betreiben des technischen Geräts oder Gerätesystems anzugeben.

Diese Aufgabe der Erfindung wird mit einem Verfahren zur Prüfung einer Konformität eines technischen Geräts oder Gerätesystems mit einer technischen Spezifikation mit den in Anspruch 1 angegebenen Merkmalen sowie mit einem Verfahren zum Betreiben des technischen Geräts oder Gerätesystems mit den in Anspruch 9 angegebenen Merkmalen und mit einem Computerprogrammprodukt mit den in Anspruch 10 angegebenen Merkmalen sowie mit einem Prüfrechner mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Prüfung einer Konformität eines technischen Geräts oder Gerätesystems mit einer technischen Spezifikation zur IT-Sicherheit wird die technische Spezifikation in mehrere Anforderungskategorien für Anforderungen zur IT-Sicherheit an das technische Gerät oder Gerätesystem unterteilt und es wird ein Regelsatz herangezogen, mittels welcher jeder der Anforderungskategorien zumindest eine Prüfmaßnahme zugeordnet ist und mittels der zugeordneten Prüfmaßnahmen wird das technische Gerät oder Gerätesystem in jeder der Anforderungskategorien einer Prüfung unterzogen und abhängig von einem Ergebnis der Prüfungen wird das Vorliegen oder Nichtvorliegen der Konformität festgestellt.

Mittels des erfindungsgemäßen Verfahrens ist es möglich, eine Prüfung der Konformität eines technischen Geräts oder Gerätesystems mit einer technischen Spezifikation auf eine Prüfung einer Anzahl von Anforderungskategorien aufzuteilen. Erfindungsgemäß ist es nicht erforderlich, für jede der Anforderungskategorien eine manuelle Auswahl von Prüfmaßnahmen wie Prüfszenarien oder Prüfwerkezeugen vorzunehmen. Denn aufgrund des Regelsatzes kann für jede Anforderungskategorie eine Prüfung des technischen Geräts oder Gerätesystems im Hinblick auf diese Anforderungskategorie automatisiert durchgeführt werden. Vorteilhaft enthält der Regelsatz die erforderlichen Prüfmaßnahmen für jede Anforderungskategorie. Sobald eine Aufteilung der Prüfung der Konformität in individuelle Prüfungen des technischen Geräts oder Gerätesystems auf Erfüllung der Anforderungskategorien erfolgt ist, kann die weitere Prüfung mit dem erfindungsgemäßen Verfahren ohne jeden weiteren manuellen Eingriff durchgeführt werden.

Bei dem erfindungsgemäßen Verfahren ist oder umfasst die IT-Sicherheit bevorzugt eine Funktionssicherheit des technischen Geräts oder Gerätesystems und/oder eine Informationssicherheit des technischen Geräts oder Gerätesystems. Sowohl die Informationssicherheit technischer Geräte oder Gerätesysteme als auch die Funktionssicherheit technischer Geräte oder Gerätesysteme bilden im industriellen Umfeld kritische Betriebsparameter der technischen Geräte oder Gerätesysteme. Die IT-Sicherheit ist in diesen beiden Aspekten ein besonders relevantes Kriterium. Auf Informationssicherheit und/oder Funktionssicherheit lässt sich das technische Gerät oder Gerätesystem mittels des erfindungsgemäßen Verfahrens leicht prüfen.

Zweckmäßig ist oder umfasst bei dem erfindungsgemäßen Verfahren die technische Spezifikation eine Aufstellung einzelner technischer Anforderungen an das technische Gerät oder Gerätesystem, insbesondere ein/en Standard zur Informationssicherheit oder ein/en Standard zur Funktionssicherheit. Alternativ kann die technische Spezifikation auch zugleich einen Standard zur Informationssicherheit und einen Standard zur Funktionssicherheit umfassen.

Bei dem Verfahren gemäß der Erfindung umfasst die Prüfmaßnahme vorzugsweise jeweils ein oder mehrere Prüfszenarien, vorzugsweise in Gestalt von Testfällen, und/oder ein oder mehrere Prüfwerkzeuge. Bei den Prüfwerkzeugen im Sinne dieser Erfindung handelt es sich zweckmäßig um Computerprogramme, welche insbesondere eingerichtet sind, Eingangsdaten für das technische Gerät oder Gerätesystem zu generieren und an dieses zu übermitteln und vorzugsweise die Reaktion des Geräts oder Gerätesystems auf diese Eingangsdaten zu überwachen und/oder Ausgangsdaten des technischen Geräts oder Gerätesystems zu empfangen und auszuwerten und/oder einen Zustand des technischen Geräts oder Gerätesystems bei der Verarbeitung von Information zu überwachen.

Bei dem erfindungsgemäßen Verfahren stimmen in einer vorteilhaften Weiterbildung die Prüfmaßnahmen sämtlicher Anforderungskategorien nicht überein und insbesondere stimmen mindestens ein Prüfszenario und/oder mindestens ein Prüfwerkzeug mindestens zweier Anforderungskategorien nicht überein. In dieser Weiterbildung der Erfindung ist die Zuordnung mittels des Regelsatzes eine nicht-triviale Zuordnung, d. h. es werden für mindestens zwei Anforderungskategorien nicht dieselben Prüfszenarien und/oder Prüfwerkzeuge zugeordnet.

Zweckmäßig bilden oder umfassen bei dem erfindungsgemäßen Verfahren die Anforderungskategorien eine oder mehrere Anforderung an zumindest eine Komponente und/oder an zumindest einen Algorithmus, insbesondere einen kryptographischen Algorithmus, und/oder an eine Konfiguration, insbesondere der zumindest einen Komponente oder des zumindest einen Algorithmus, und/oder an eine Eingabe und/oder Ausgabe des technischen Geräts oder Gerätesystems.

Vorzugsweise bilden bei dem erfindungsgemäßen Verfahren eine Übertragung von ungültigen, d. h. nicht vorgesehenen, Eingangsdaten an das technische Gerät oder Gerätesystems und/oder SQL-Injektionstests und/oder XSS-Tests Prüfszenarien im Sinne der vorliegenden Erfindung.

Vorzugswiese wird bei dem Verfahren gemäß der Erfindung die technische Spezifikation derart in die Anforderungskategorien für Anforderungen zur IT-Sicherheit an das technische Gerät unterteilt, dass eine Unterteilung der technischen Spezifikation in Anforderungskategorie-Kandidaten herangezogen wird und abhängig von einer Geräteinformation und/oder einer Gerätekontextinformation eine oder mehrere Anforderungskategorie-Kandidaten als Anforderungskategorien herangezogen werden oder nicht. D. h. es wird anhand der Geräteinformation und/oder der Gerätekontextinformation eine Auswahl der Anforderungskategorie-Kandidaten vorgenommen und nur die Anforderungskategorie-Kandidaten der Auswahl bilden die Anforderungskategorien. Auf diese Weise können für ein konkret vorliegendes technisches Gerät oder Gerätesystem Anforderungskategorien, welche für das jeweils vorliegende technische Gerät oder Gerätesystem aufgrund der Geräteinformation oder aufgrund der Gerätekontextinformation nicht oder nicht notwendig geprüft werden müssen, außer Acht gelassen werden.

Alternativ und/oder zusätzlich und ebenfalls bevorzugt können bei dem erfindungsgemäßen Verfahren abhängig von der Geräteinformation und/oder der Gerätekategorie auch zusätzliche Anforderungskategorien einbezogen werden und dem Regelsatz zugefügt werden.

In einer vorteilhaften Weiterbildung des erfindungsgemäßen Verfahrens ist das technische Gerät ein Steuerungsgerät und/oder eine Maschine und/oder eine Fertigungsvorrichtung, insbesondere ein Fertigungswerkzeug, und/oder eine Verfahrenstechnikvorrichtung. Alternativ und ebenfalls bevorzugt ist das technische Gerätesystem eine Automatisierungsanlage, insbesondere eine Fertigungsanlage und/oder eine verfahrenstechnische Anlage. Gerade für die vorgenannten technischen Geräte ist die IT-Sicherheit besonders betriebskritisch. Vorzugsweise ist das technische Gerät oder Gerätesystem für den Betrieb in einem Automatisierungssystem, insbesondere einem Fertigungssystem und/oder einem Verfahrenstechniksystem, ausgebildet und eingerichtet und vorzugsweise Teil eines solchen Automatisierungssystems.

Geeigneterweise ist das Verfahren gemäß der Erfindung computerimplementiert, d. h. die Verfahrensschritte des erfindungsgemäßen Verfahrens werden vorzugsweise mittels eines Computers in Gestalt eines Rechners, insbesondere eines eigens für diese Aufgabe abgestellten Prüfrechners, ausgeführt.

Bei dem erfindungsgemäßen Verfahren zum Betreiben eines technischen Geräts oder technischen Gerätesystems wird ein erfindungsgemäßes Verfahren zur Prüfung einer Konformität dieses technischen Geräts oder dieses technischen Gerätesystems mit einer technischen Spezifikation zur IT-Sicherheit wie zuvor beschrieben durchgeführt und es wird dann, wenn ein Nichtvorliegen der Konformität festgestellt wird, eine Aktualisierung des technischen Geräts (TG) oder technischen Gerätesystems vorgenommen oder das Betreiben des technischen Geräts (TG) oder technischen Gerätesystems wird beendet.

Das erfindungsgemäße Computerprogrammprodukt ist bei Ausführung auf einem Rechner zur Ausführung eines erfindungsgemäßen Verfahrens wie zuvor beschrieben ausgebildet und eingerichtet.

Der erfindungsgemäße Prüfrechner weist ein erfindungsgemäßes Computerprogrammprodukt wie zuvor beschrieben auf.

Nachfolgend wird die Erfindung anhand eines in der Zeichnung dargestellten Ausführungsbeispiels näher erläutert. Die einzige Zeichnungsfigur 1 zeigt einen Ablauf des erfindungsgemäßen Verfahrens zur Prüfung einer Konformität eines technischen Geräts mit einer technischen Spezifikation zur IT-Sicherheit schematisch in einer Prinzipskizze.

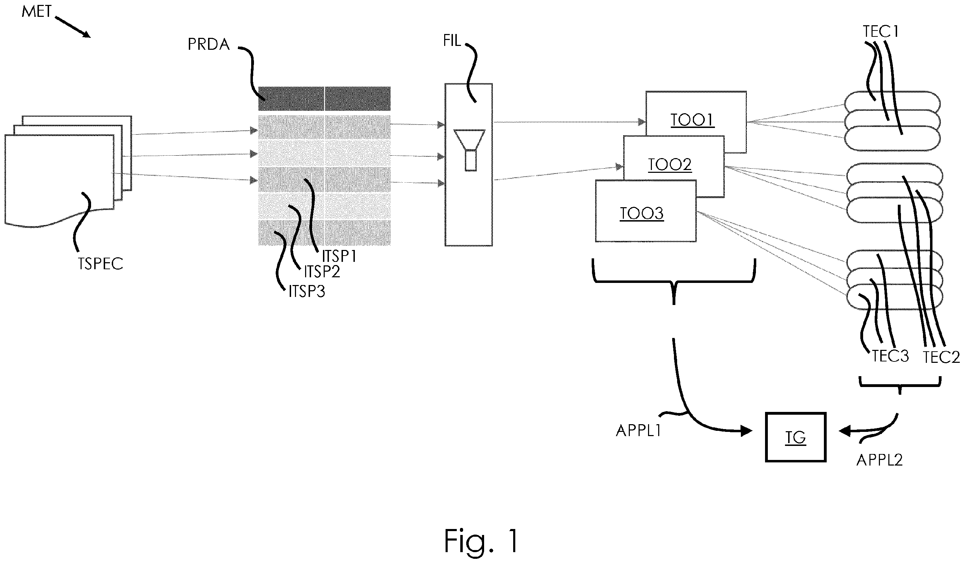

Das in der Figur 1 dargestellte erfindungsgemäße Verfahren MET ist ein Verfahren MET zur Prüfung einer Konformität eines technischen Geräts TG mit einer technischen Spezifikation TSPEC zur IT-Sicherheit.

Im dargestellten Verfahren bildet die technische Spezifikation TSPEC einen Standard zur Informationssicherheit. In weiteren, nicht eigens dargestellten Ausführungsbeispielen handelt es sich bei der technischen Spezifikation um einen Standard zur Funktionssicherheit oder um eine hybride technische Spezifikation, welche sowohl einen ersten Standard zur Informationssicherheit als auch einen zweiten Standard zur Funktionssicherheit aufweist.

Das technische Gerät TG ist im dargestellten Ausführungsbeispiel eine Steuerungseinrichtung zur Steuerung einer digitalen Fertigungsanlage. In weiteren, nicht eigens dargestellten Ausführungsbeispielen ist das technische Gerät TG ein Werkzeug des digitalen Fertigungsanlage oder eine Steuerungseinrichtung eines Prozessleitsystems, insbesondere einer Biotechnologieanlage.

Das technische Gerät TG ist im dargestellten Ausführungsbeispiel zur Steuerung digitalen 3D-Drucks mittels der Fertigungsanlage ausgebildet. Dazu übernimmt das technische Gerät TG zum einen Eingangsdaten in Form von Fertigungsvorgaben, wie beispielsweise eine Fertigungszeit und eine Fertigungstoleranz. Ausgehend von diesen Fertigungsvorgaben ermittelt das technische Gerät TG eine erforderliche Werkzeugallokation und einen Produktionsablauf, welcher einen Arbeitsplan und eine Stückliste umfasst. Basierend auf dem Arbeitsplan gibt das technische Gerät TG einen Satz von Ausgabedaten in Form von Steuerungsbefehlen aus. Die Steuerungsbefehle dienen zur Umsetzung des Arbeitsplans mittels der über die WerkzeugAllokation allokierten Fertigungswerkzeuge, beispielsweise 3D-Drucker, Förderbänder und Materialförderschnecken.

Das technische Gerät TG hält zudem einen Satz von Konfigurationsdaten in einem Konfigurationsdatenspeicher vor, welche die Ermittlung der Ausgabedaten in Abhängigkeit der Eingangsdaten, hier der Fertigungsvorgaben, ermöglichen. Die Konfigurationsdaten umfassen im dargestellten Ausführungsbeispiel einen Planungsalgorithmus, mittels dessen anhand der Fertigungsvorgaben die Stückliste und wie oben beschrieben der Arbeitsplan ermittelt werden können. Zudem hält das technische Gerät TG mehrere kryptographische Algorithmen vor, insbesondere einen kryptographischen Autorisierungsalgorithmus, mittels welchem die Herkunft der Eingangsdaten überprüft wird. Dabei sind die Eingangsdaten mittels eines kryptographischen Herkunftszertifikats, hier einer digitalen Herkunftssignatur, autorisiert. Mittels des kryptographischen Autorisierungsalgorithmus des technischen Geräts TG wird das kryptographische Herkunftszertifikat der Eingangsdaten überprüft. Zudem werden die Ausgabedaten mittels eines vom technischen Gerät TG vorgehaltenen kryptographischen Verschlüsselungsalgorithmus verschlüsselt, sodass die konkreten technischen Fertigungsabläufe der digitalen Fertigungsanlage nicht von unberechtigter Seite ausgespäht werden können.

Das technische Gerät TG steht im dargestellten Ausführungsbeispiel zudem in einem spezifischen Gerätekontext, hier einem nachfolgend beschriebenen Kommunikationskontext: so ist das technische Gerät TG beispielsweise zur Aktualisierung des Planungsalgorithmus über einen nicht eigens in der Figur dargestellten Cloudspeicher ausgebildet. Dazu ist das technische Gerät zur Kommunikation mit dem Cloudspeicher mittels Trust-Parametern ausgebildet, bei welchem die Trust-Parameter die Vertrauenswürdigkeit einer jeweils vom technischen Gerät TG empfangenen und aus dem Cloudspeicher bezogenen Aktualisierung kennzeichnen, beispielsweise eine digitale Signatur des Cloudspeichers oder einen über eine Mehr-Wege-Kommunikation erhaltenen Prüfwert der jeweiligen Aktualisierung. Zur Kommunikation mit dem Cloudspeicher weist das technische Gerät TG ein Kommunikationsmodul mit einer bestimmten Betriebssoftware einer bestimmten Betriebssoftwareversion auf, welches die Kommunikation mit dem Cloudspeicher und eine Prüfung der Vertrauenswürdigkeit eines empfangenen Updates mittels der Trust-Parameter vornimmt.

Das vorhergehend beschriebene technische Gerät TG wird nun mittels eines erfindungsgemäßen, computerimplementierten Prüfverfahrens auf eine Konformität des technischen Geräts TG mit dem zuvor beschriebenen Standard zur Funktionssicherheit geprüft. D. h. es wird geprüft, ob das technische Gerät TG den Erfordernissen des Standards zur Informationssicherheit genügt oder nicht.

Zu diesem Zweck werden bei dem erfindungsgemäßen Verfahren die technischen Erfordernisse des Standards zur Informationssicherheit in einzelne IT-Sicherheitsparameter ITSP1, ITSP2, ITSP3 unterteilt, welche jeweils einzeln überprüfbar sind. Die Prüfung des Standards lässt sich somit in eine Prüfung der einzelnen IT-Sicherheitsparameter ITSP1, ITSP2, ITSP3 zergliedern.

Solche IT-Sicherheitsparameter ITSP1, ITSP2, ITSP3 sind beispielsweise die Zuverlässigkeit einer Prüfung von Eingangsdaten, welche im dargestellten Fall etwa wie oben beschrieben in Form von Fertigungsvorgaben an das technische Gerät TG übertragen werden können. Ferner umfassen die IT-Sicherheitsparameter ITSP1, ITSP2, ITSP3 des technischen Geräts TG die Sicherheit der Implementierung kryptographischer Algorithmen, etwa der Implementierung des zuvor erwähnten Autorisierungsalgorithmus sowie des vorhergehend beschriebenen Verschlüsselungsalgorithmus. Zudem können die IT-Sicherheitsparameter ITSP1, ITSP2, ITSP3 eine Informationssicherheit des technischen Geräts bei bestimmten Kombinationen von Konfigurationsdaten im Konfigurationsspeicher umfassen. So kann beispielsweise eine wenig sichere Handhabung von Konfigurationsdaten durch das technische Gerät unvorhergesehene Zustände oder Systemabstürze des technischen Geräts mit schwerwiegenden Folgen für die Informationssicherheit zur Folge haben.

Die vorgenannten IT-Sicherheitsparameter ITSP1, ITSP2, ITSP3 stellen folglich potenzielle Schwachstellen dar, deren Verwendung die IT-Sicherheit des technischen Geräts TG ernsthaft beeinträchtigen kann. Diese IT-Sicherheitsparameter ITSP1, ITSP2, ITSP3 werden daher zur Prüfung des technischen Geräts TG auf Konformität mit dem Standard zur Informationssicherheit herangezogen.

Zur Prüfung der IT-Sicherheitsparameter ITSP1, ITSP2, ITSP3 wird eine Zuordnungsdatenbank PRDA herangezogen, welche eine Zuordnung on IT-Sicherheitsparametern zu IT-Prüfmaßnahmen umfasst. Im dargestellten Ausführungsbeispiel sind die IT-Prüfmaßnahmen mit einzelnen Prüfwerkzeugen TOO1, TOO2, TOO3 in Gestalt von Softwaretools gebildet, welche jeweils zur Prüfung der IT-Sicherheitsparameter ITSP1, ITSP2, ITSP3 ausgebildet sind.

Mittels der Prüfdatenbank kann folglich das technische Gerät TG auf Konformität mit dem Standard zur Informationssicherheit geprüft werden. Dazu sind jedoch nicht notwendig sämtliche IT-Sicherheitsparameter ITSP1, ITSP2, ITSP3, in welche die technischen Erfordernisse des Standards zur Informationssicherheit unterteilt sind, vorliegend tatsächlich relevant. Denn einige IT-Sicherheitsparameter können beispielsweise abhängig von einem Gerätetyp des technischen Geräts TG relevant sein oder nicht. So können für einige Gerätetypen bestimmte IT-Sicherheitsparameter ITSP1, ITSP2, ITSP3 die etwa bei einer bestimmten Art von Eingangsdaten auftreten, für die Informationssicherheit relevant sein, da das technische Gerät TG zum Empfang solcher Eingangsdaten ausgebildet ist. Andere technische Geräte hingegen sind für den Empfang solcher Eingangsdaten technisch nicht eingerichtet, sodass eine Prüfung dieser IT-Sicherheitsparameter ITSP1 entbehrlich ist.

Andere technische Geräte wiederum stehen in einem solchen Kommunikationskontext, in welchem das technische Gerät mit einem auf sonstige Weise als vertrauenswürdig geltenden Cloudspeicher kommuniziert. Beispielsweise ist der Cloudspeicher vollständig gegenüber externen, unberechtigten Zugriffen gesichert und steht vollständig unter der Zugriffskontrolle des Betreibers des technischen Geräts TG. Insoweit kann beispielsweise die Prüfung von IT-Sicherheitsparametern ITSP1, ITSP2, ITSP3, welche nur bei der Kommunikation mit dem Cloudspeicher betroffen sind, für verzichtbar erklärt werden.

Solche IT-Sicherheitsparameter ITSP1, ITSP2, ITSP3, welche aufgrund der Geräteinformation oder aufgrund eines Gerätekontextes, etwa eines Kommunikationskontextes wie oben beschrieben, nicht notwendig in die Prüfung des technischen Geräts TG einzubeziehen sind, werden von einem Filtermodul FIL ausgefiltert, d. h. nicht weiter berücksichtigt.

In weiteren, nicht eigens dargestellten Ausführungsbeispielen können anhand des Gerätekontextes des technischen Geräts TG auch zusätzliche IT-Sicherheitsparameter in die Prüfung auf Konformität einbezogen werden: So können z. B. zusätzliche IT-Sicherheitsparameter infolge eines Einbaus einer Firewall in das Kommunikationsmodul des technischen Geräts TG erforderlich werden.

Nachfolgend werden diejenigen IT-Sicherheitsparameter ITSP1, ITSP2, ITSP3, welche vom Filtermodul FIL nicht ausgefiltert sind, mittels der in der Zuordnungsdatenbank PRDA enthaltenen Prüfwerkzeuge TOO1, TOO2, TOO3 geprüft. Dazu werden sämtliche Prüfszenarien TEC1, TEC2, TEC3, d. h. Testfälle, welche von den einzelnen Prüfwerkzeugen TOO1, TOO2, TOO3 zur Prüfung des jeweiligen IT-Sicherheitsparameters ITSP1, ITSP2, ITSP3 herangezogen werden können, in einem einfachen Ausführungsbeispiel zur Prüfung des technischen Geräts TG herangezogen.

Zur Vermeidung von Redundanz wird in einem erweiterten Ausführungsbeispiel eine solche Zuordnungsdatenbank PRDA herangezogen, welche zu den einzelnen IT-Sicherheitsparametern ITSP1, ITSP2, ITSP3 nicht allein die jeweils einschlägig heranziehbaren Prüfwerkzeuge TOO1, TOO2, TOO3 enthält, sondern die Zuordnungsdatenbank PRDA enthält in diesem erweiterten Ausführungsbeispiel darüber hinaus eine Liste von Prüfszenarien TEC1, TEC2, TEC3, welche eine Prüfung der IT-Sicherheitsparameter ITSP1, ITSP2, ITSP3 redundanzfrei und vollständig erlauben. Die Zuordnungsdatenbank PRDA enthält also eine sehr vollständige Beschreibung des Prüfvorgangs für jeden IT-Sicherheitsparameter ITSP1, ITSP2, ITSP3 und ordnet jedem IT-Sicherheitsparameter ITSP1, ITSP2, ITSP3 sowohl eines oder mehrere Prüfwerkzeuge TOO1, TOO2, TOO3 sowie einen oder mehrere Prüfszenarien TEC1, TEC2, TEC3 zu.

Hinsichtlich jedes der Sicherheitsparameter ITSP1, ITSP2, ITSP3 wird das technische Gerät TG nun einer Prüfung unterzogen, indem die Prüfwerkzeuge TOO1, TOO2, TOO3 in Anwendungsschritten APPL1 eingesetzt werden. Dazu werden die Prüfszenarien TEC1, TEC2, TEC3 in einem Schritt APPL2 realisiert.

Wenn die Prüfung des technischen Geräts TG hinsichtlich jedes der IT-Sicherheitsparameter ITSP1, ITSP2, ITSP3 mit den Prüfwerkzeugen TOO1, TOO2, TOO3 und den Prüfszenarien TEC1, TEC2, TEC3 erfolgreich ist, so wird das technische Gerät TG als konform mit der technischen Spezifikation TSPEC beurteilt. Anderenfalls wird keine Konformität mit der technischen Spezifikation TSPEC festgestellt.

Mittels des zuvor beschriebenen erfindungsgemäßen Verfahrens wird das technische Gerät TG betrieben. Wird keine Konformität festgestellt, so wird das technische Gerät TG einer Aktualisierung, insbesondere einer Softwareaktualisierung, unterzogen. Alternativ kann das Betreiben des technischen Geräts TG beendet werden.

Das zuvor beschriebene erfindungsgemäße Verfahren wird mit einem mit dem technischen Gerät TG kommunikationsverbundenen, vorzugsweise direkt angebundenen, erfindungsgemäßen Prüfrechner durchgeführt, welcher die Prüfszenarien TEC1, TEC2, TEC3 mit den Prüfwerkzeugen TOO1, TOO2, TOO3 durchführt. Die Prüfwerkzeuge TOO1, TOO2, TOO3 sind dabei auf dem Prüfrechner ablaufende Softwaretools. Die Feststellung der Konformität mit der technischen Spezifikation TSPEC wird mittels einer auf dem Prüfrechner ablaufenden Programmroutine anhand der einzelnen Testergebnisse der Prüfwerkzeuge TOO1, TOO2, TOO3 unternommen. Beispielsweise wird mit dieser Programmroutine auf eine nicht bestehende Konformität geschlossen, wenn die Prüfung des technischen Geräts TG hinsichtlich eines einzigen IT-Sicherheitsparameters ITSP1, ITSP2, ITSP3 nicht erfolgreich ist. Die Zuordnungsdatenbank PRDA wird in einem Speicher des Prüfrechners vorgehalten.

Die einzelnen IT-Sicherheitsparameter ITSP1, ITSP2, ITSP3 können von einem Nutzer vor der Prüfung des technischen Geräts TG auf Konformität mittels einer Benutzerführung, etwa mittels eines *"Wizards",* ausgewählt werden, etwa in Gestalt einer interaktiven Auswahl durch den Nutzer, indem alle für die technische Spezifikation TSPEC relevanten IT-Sicherheitsparameter ITSP1, ITSP2, ITSP3 abgefragt werden. Grundsätzlich können die IT-Sicherheitsparameter ITSP1, ITSP2, ITSP3 auch für eine Anzahl an vorgegebenen technischen Spezifikationen TSPEC zur IT-Sicherheit, etwa für eine Anzahl an Standards zur IT-Sicherheit, vordefiniert vorliegen. Die Erfordernisse der technischen Spezifikation TSPEC werden dann folglich durch Heranziehen dieser vordefinierten IT-Sicherheitsparameter ITSP1, ITSP2, ITSP3 in diese IT-Sicherheitsparameter aufgeteilt.

Die Zuordnungsdatenbank PRDA wird regelmäßig für sämtliche infrage kommenden IT-Sicherheitsparameter ITSP1, ITSP2, ITSP3 fortlaufend gepflegt und wird zur Ausführung des erfindungsgemäßen Verfahrens herangezogen. Die Zuordnungsdatenbank kann grundsätzlich in weiteren Ausführungsbeispielen Einträge von Herstellern von Prüfwerkzeugen enthalten, welche für IT-Sicherheitsparameter ITSP1, ITSP2, ITSP3 Prüfszenarien TEC1, TEC2, TEC3 sowie Prüfwerkzeuge TOO1, TOO2, TOO3 vorschlagen können, etwa mittels eines fortlaufenden Abonnements. Grundsätzlich können aus mehreren Abonnements geeignete, tatsächlich in die Zuordnungsdatenbank PRDA eingehende Einträge nach IT-Sicherheitsgesichtspunkten und optional weiteren Kriterien ausgewählt werden, beispielsweise wenn alternative Prüfwerkzeuge TOO1, TOO2, TOO3 und Prüfszenarien TEC1, TEC2, TEC3 für dieselben Sicherheitsparameter ITSP1, ITSP2, ITSP3 verfügbar sind.

Der Prüfrechner wird zur Ausführung des oben beschriebenen erfindungsgemäßen Verfahrens mit einem erfindungsgemäßen Computerprogramm betrieben.

In weiteren, nicht eigens dargestellten Ausführungsbeispielen ist der Standard zur IT-Sicherheit beispielsweise der mit IEC 62443 4-2 bezeichnete Standard.

An die Stelle des im vorhergehenden Ausführungsbeispiel beschriebenen technischen Geräts TG kann in weiteren, nicht eigens dargestellten Ausführungsbeispielen ein technisches Gerätesystem treten, etwa ein Automatisierungssystem in Gestalt einer Fertigungsanlage oder einer verfahrenstechnischen Anlage.

## Patentansprüche

1. Verfahren zur Prüfung einer Konformität eines technischen Geräts (TG) oder technischen Gerätesystems mit einer technischen Spezifikation (TSPEC) zur IT-Sicherheit, bei welchem
- die technische Spezifikation (TSPEC) in mehrere Anforderungskategorien (ITSP1, ITSP2, ITSP3) für Anforderungen zur IT-Sicherheit an das technische Gerät (TG) oder Gerätesystem unterteilt wird und
- bei welchem ein Regelsatz (PRDA) herangezogen wird, mittels welcher jeder der Anforderungskategorien (ITSP1, ITSP2, ITSP3) zumindest eine Prüfmaßnahme (TOO1, TOO2, TOO3, TEC1, TEC2, TEC3) zugeordnet ist und
- bei welchem mittels der zugeordneten Prüfmaßnahmen (TOO1, TOO2, TOO3, TEC1, TEC2, TEC3) das technische Gerät oder Gerätesystem in jeder der Anforderungskategorien (ITSP1, ITSP2, ITSP3) einer Prüfung unterzogen wird und
- Abhängig von einem Ergebnis der Prüfungen das Vorliegen oder Nichtvorliegen der Konformität festgestellt wird.

2. Verfahren nach dem vorhergehenden Anspruch, bei welchem die IT-Sicherheit eine Funktionssicherheit des technischen Geräts (TG) oder Gerätesystems ist oder umfasst und/oder eine Informationssicherheit des technischen Geräts (TG) oder Gerätesystems ist oder umfasst.

3. Verfahren nach einem der vorhergehenden Ansprüche, bei welchem die Prüfmaßnahme (TOO1, TOO2, TOO3, TEC1, TEC2, TEC3) jeweils ein oder mehrere Prüfszenarien (TEC1, TEC2, TEC3), vorzugsweise in Gestalt von Testfällen, und/oder ein oder mehrere Prüfwerkzeuge (TOO1, TOO2, TOO3) umfasst.

4. Verfahren nach einem der vorhergehenden Ansprüche, bei welchem die Prüfmaßnahmen (TOO1, TOO2, TOO3, TEC1, TEC2, TEC3) sämtlicher Anforderungskategorien nicht sämtlich miteinander übereinstimmen und insbesondere mindestens ein Prüfszenario (TEC1, TEC2, TEC3) und/oder mindestens ein Prüfwerkzeug (TOO1, TOO2, TOO3) mindestens zweier Anforderungskategorien (ITSP1, ITSP2, ITSP3) nicht übereinstimmen.

5. Verfahren nach einem der vorhergehenden Ansprüche, bei welchem die Anforderungskategorien (ITSP1, ITSP2, ITSP3) jeweils zumindest eine oder mehrere Anforderungen an zumindest eine Komponente und/oder an zumindest einen Algorithmus, insbesondere einen kryptographischen Algorithmus, und/oder an eine Konfiguration, insbesondere der zumindest einen Komponente oder des zumindest einen Algorithmus, und/oder an eine Eingabe und/oder Ausgabe des technischen Geräts (TG) oder Gerätesystems umfassen oder bilden.

6. Verfahren nach einem der vorhergehenden Ansprüche, bei welchem die technische Spezifikation (TSPEC) derart in die Anforderungskategorien (ITSP1, ITSP2, ITSP3) für Anforderungen zur IT-Sicherheit an das technische Gerät (TG) oder Gerätesystems unterteilt wird, dass eine Unterteilung der technischen Spezifikation (TSPEC) in Anforderungskategorie-Kandidaten herangezogen wird und abhängig von einer Geräteinformation und/oder einer Gerätekontextinformation eine oder mehrere Anforderungskategorie-Kandidaten als Anforderungskategorien (ITSP1, ITSP2, ITSP3) herangezogen werden oder nicht.

7. Verfahren nach einem der vorhergehenden Ansprüche, bei welchem das technische Gerät (TG) oder Gerätesystem eine Steuerungsgerät und/oder eine Maschine und/oder eine Fertigungsvorrichtung, insbesondere ein Fertigungswerkzeug, und/oder eine Verfahrenstechnikvorrichtung ist oder aufweist.

8. Verfahren zum Betreiben eines technischen Geräts oder technischen Gerätesystems, bei welchem ein Verfahren zur Prüfung einer Konformität dieses technischen Geräts (TG) oder dieses technischen Gerätesystems mit einer technischen Spezifikation (TSPEC) zur IT-Sicherheit nach einem der vorhergehenden Ansprüche durchgeführt wird und bei welchem dann, wenn ein Nichtvorliegen der Konformität festgestellt wird, eine Aktualisierung des technischen Geräts (TG) oder technischen Gerätesystems vorgenommen wird oder das Betreiben des technischen Geräts (TG) oder technischen Gerätesystems beendet wird.

9. Verfahren nach einem der vorhergehenden Ansprüche, welches computerimplementiert ist.

10. Computerprogrammprodukt, welches bei Ausführung auf einem Rechner zur Ausführung eines Verfahrens (MET) nach einem der vorhergehenden Ansprüche ausgebildet und eingerichtet ist.

11. Prüfrechner mit einem Computerprogrammprodukt nach dem vorhergehenden Anspruch.
